# EUROPEAN PATENT SPECIFICATION

(11) **EP 3 858 572 B1**
(45) Date of publication and mention of the grant of the patent: **12.03.2025**
(21) Application number: 19876350.0
(22) Date of filing: 21.10.2019
(51) Int. Cl.: B29C 33/38, B29C 41/26, B29C 59/04, G02B 1/118

(54) **MASTER PLATE, MASTER PLATE MANUFACTURING METHOD, AND TRANSFER BODY MANUFACTURING METHOD**
MASTERPLATTE, VERFAHREN ZUR HERSTELLUNG EINER MASTERPLATTE UND VERFAHREN ZUR HERSTELLUNG EINES ÜBERTRAGUNGSKÖRPERS
GABARIT DE COPIAGE, PROCÉDÉ DE FABRICATION DE GABARIT DE COPIAGE ET PROCÉDÉ DE FABRICATION DE CORPS DE TRANSFERT

(30) Priority: 22.10.2018 JP 2018198346; 18.10.2019 JP 2019191159
(43) Date of publication of application: 04.08.2021
(73) Proprietor: Dexerials Corporation, Tokyo 141-0032 (JP)
(72) Inventor: KAJIYA, Shunichi, Tokyo 141-0032 (JP)
(74) Representative: Müller-Boré & Partner Patentanwälte PartG mbB
(86) International application number: PCT/JP2019/041280
(87) International publication number: WO 2020/085288

(56) References cited:
- WO-A1-2010/140648
- WO-A1-2010/140648
- WO-A1-2018/074512
- JP-A- 2009 208 410
- JP-A- 2009 208 410
- JP-A- 2010 274 460
- JP-A- 2013 039 781
- JP-A- 2015 082 542
- JP-A- 2015 082 542
- KR-A- 20150 049 626
- US-A1- 2005 057 789

## Description

### Technical Field

The present invention relates to a master, a method of manufacturing the master, and a method of manufacturing a transferred object.

### Background Art

In recent years, development of an imprinting technology which is one of microfabrication technologies is being advanced. The imprinting technology is a technology of pressing a master having a micro concave-convex structure formed in a surface against a transferred material, and then curing the transferred material to transfer the concave-convex structure in the surface of the master to the transferred material.

A known example of such an imprinting technology is the roll-to-roll imprinting technology of continuously pressing a roll-shaped master against a transferred material to continuously transfer the concave-convex structure in the surface of the master to the transferred material. In the continuous transfer through use of such a roll-shaped master, however, the transferred material may start curing unintendedly before transfer to cause a failure in transferring the concave-convex structure.

Specifically, in a case where the transferred material is a light-curing resin, unintended curing of the transferred material is caused by unintended light emission to the transferred material through a base material of the master. For example, guided light or transmitted light passed through the base material of the master may be emitted to the transferred material in an unintended region to cure the transferred material in the unintended region.

For example, Patent Literature 1 below discloses a technology of providing a metallic UV absorption layer on a micro structure layer formed in a base material in a roll-shaped mold for imprinting, and restraining guided light or transmitted light passing through the base material to restrain occurrence of a transfer failure. Patent Literature 2 discloses a master for forming a fine concavo-convex pattern.

### Citation List

### Patent Literature

Patent Literature 1: JP 2013-45792A
Patent Literature 2: US 2005/057789A1

### Summary of Invention

### Technical Problem

On the other hand, as a method of manufacturing a transferred object at lower cost and with high efficiency, cleaning a master after transfer to remove a transferred material adhering to the surface of the master, thereby enabling the master to be used repeatedly is being studied. However, Patent Literature 1 does not sufficiently study repeated use of the roll-shaped mold which is the master. Therefore, a master suitable for repeated use through cleaning has been demanded.

The present invention was therefore made in view of the above circumstances, and an object of the present invention is to provide a novel and improved master that enables a transferred object in which a transfer failure is restrained to be manufactured with higher efficiency, a method of manufacturing the master, and a method of manufacturing a transferred object through use of the master.

### Solution to Problem

In order to achieve the above-mentioned object, there is provided a master according to claim 1. Further embodiments are described in the dependent claims.

In addition, in order to achieve the above-mentioned object, there is provided a method of manufacturing a master according to claim 11.

The above-described configuration can provide a master that restrains occurrence of propagating light transmitted or guided through the inside of the master, and even when cleaned repeatedly, does not reduce the effect of restraining occurrence of propagating light.

### Advantageous Effects of Invention

According to the present invention as described above, a transferred object in which a transfer failure is restrained can be manufactured with higher efficiency.

### Brief Description of Drawings

[FIG. 1] FIG. 1 is a cross-section diagram schematically illustrating a configuration of a master according to an embodiment of the present invention.
[FIG. 2A] FIG. 2A is a cross-section diagram schematically illustrating a master according to Comparative Example 1 in which the arrangement of an absorption layer has been changed.
[FIG. 2B] FIG. 2B is a cross-section diagram schematically illustrating a master according to Comparative Example 2 in which the arrangement of an absorption layer has been changed.
[FIG. 3A] FIG. 3A is a flowchart describing steps of manufacturing the master and a transferred object according to the embodiment.
[FIG. 3B] FIG. 3B is a flowchart describing steps of manufacturing the master and the transferred object according to the embodiment.
[FIG. 4] FIG. 4 is a schematic diagram describing a method of measuring a light reflectance for a transferred object.
[FIG. 5] FIG. 5 is a graph illustrating results of measuring light reflectances for transferred objects.
[FIG. 6] FIG. 6 is a schematic diagram describing a method of measuring a light transmittance for a master.
[FIG. 7] FIG. 7 is a graph illustrating results of measuring light transmittances for masters before and after oxygen plasma treatment.
[FIG. 8] FIG. 8 is a graph illustrating simulation results obtained by calculating a loss transmittance for each material of the absorption layer.

### Description of Embodiments

Hereinafter, referring to the appended drawings, preferred embodiments of the present invention will be described in detail. It should be noted that, in this specification and the appended drawings, structural elements that have substantially the same function and structure are denoted with the same reference numerals, and repeated explanation thereof is omitted.

Note that in the respective drawings which will be referred to in the following description, some structural elements may be exaggerated in size for ease of description. Therefore, relative sizes of structural elements depicted in the respective drawings do not necessarily express actual size relationship between structural elements faithfully.

### <1. Configuration of master>

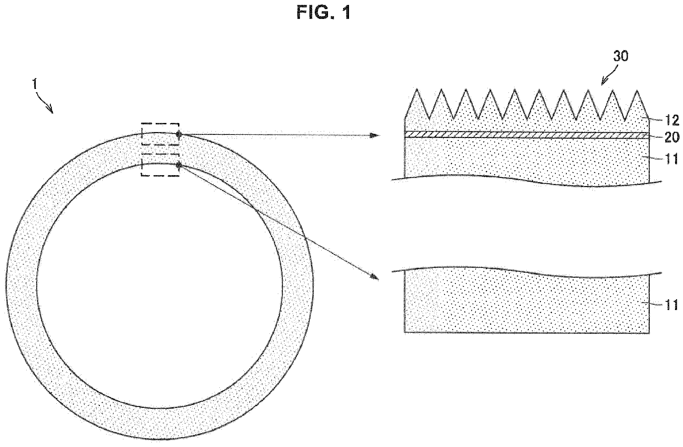

First, a configuration of a master according to an embodiment of the present invention will be described with reference to FIG. 1. FIG. 1 is a cross-section diagram schematically illustrating the configuration of the master according to the present embodiment.

A master 1 according to the present embodiment is a master to be used for roll-to-roll imprinting, for example. The master 1 enables a micro concave-convex structure 30 formed in a pattern layer 12 provided on the outer peripheral surface to be transferred to a transferred material by pressing the pattern layer 12 against the transferred material while rotating.

By cleaning the master 1 after transferring the micro concave-convex structure 30 to the transferred material using the master 1, the master 1 can be used again to transfer the micro concave-convex structure 30 to a transferred material. This is because part of the transferred object separated from the transferred material or a parting agent or the like for improving detachability between the master 1 and the transferred material is adhering to the pattern layer 12 of the master 1 after the transfer. By removing these adhering substances through cleaning, the master 1 will be able to transfer the micro concave-convex structure 30 to a transferred material again with high accuracy. The master 1 can be cleaned by, for example, immersing the master 1 in a cleaning solution in which a strong acid, a strong base, an oxidizing agent, or the like is used. For example, the master 1 can be cleaned by immersing the master 1 in a piranha solution obtained by blending sulfuric acid and a hydrogen peroxide solution.

More specifically, the master 1 includes a base material 11, an absorption layer 20, and the pattern layer 12 in which the micro concave-convex structure 30 has been formed, as illustrated in FIG. 1.

The base material 11 is a hollow, cylindrical member having a cavity inside, for example. However, the base material 11 may be a solid, columnar member having no cavity inside. Since the base material 11 has such a shape, the master 1 can be used for the roll-to-roll imprinting.

Specifically, the base material 11 may have a cylindrical shape having a height (a length in the axial direction) of more than or equal to 100 mm, a diameter of the circle at the bottom or top (an outer diameter in the radial direction orthogonal to the axial direction) of more than or equal to 50 mm and less than or equal to 300 mm, and a thickness in the radial direction of more than or equal to 2 mm and less than or equal to 50 mm.

However, the base material 11 is not limited in shape or size to the above examples. For example, the base material 11 may have a planar shape.

On one surface of the base material 11 (in a case where the base material 11 has a cylindrical shape, the outer peripheral surface of the base material 11), the pattern layer 12 in which the micro concave-convex structure 30 is formed is provided as will be described later. Thus, in order to achieve better formability of the concave-convex structure of the micro concave-convex structure 30, the surface roughness (an arithmetic mean roughness Ra) of one surface (that is, the outer peripheral surface) of the base material 11 preferably is less than or equal to 1/100 of the concavity-convexity height difference of the micro concave-convex structure 30, and more preferably is less than or equal to 1/10000. It is more favorable as the surface roughness of the one surface (that is, the outer peripheral surface) of the base material 11 is smaller, whilst from the perspective of process limitation on the base material 11, the lower limit may be set at 1/10000 of the concavity-convexity height difference of the micro concave-convex structure 30.

The base material 11 preferably is formed of a material not to be dissolved or corroded in the cleaning step performed after transfer. For example, the base material 11 preferably is formed of any type of ceramic material or glass material such as heat-resistant glass including fused silica glass, synthetic silica glass, and Tempax (registered trademark), highly transparent crown glass, or tempered glass. Furthermore, AlN, C, SiC, Si, or the like can also be used as the material of the base material 11. On the other hand, various metals, various organic resins, or the like are not preferable for the material of the base material 11 as they have low corrosion resistance or solvent resistance to the cleaning step.

The pattern layer 12 is provided on one surface of the base material 11, and is a layer in which the micro concave-convex structure 30 is formed. The pattern layer 12 in which the micro concave-convex structure 30 is formed preferably has a film thickness larger than the concavity-convexity height difference of the micro concave-convex structure 30. For example, in a case where the concavity-convexity height difference of the micro concave-convex structure 30 is 300 nm to 500 nm, the film thickness of the pattern layer 12 may be 500 nm to 700 nm.

The pattern layer 12 preferably is formed of, for example, a glass material such as fused silica glass or synthetic silica glass consisting mainly of SiO₂. The glass material consisting mainly of SiO₂ is particularly preferable for the material of the pattern layer 12 as it is easily microfabricated through etching, and has high corrosion resistance. On the other hand, a metallic material such as Al or W is not preferable for the material of the pattern layer 12 as it has low corrosion resistance to the cleaning step.

In the case where the pattern layer 12 is formed of a glass material consisting mainly of SiO₂, the pattern layer 12 has high light transparency to light near the visible light band, and is transparent. In such a case, the pattern layer 12 may produce propagating light by transmitting or guiding light (for example, ultraviolet rays) emitted for curing the transferred material during transfer. Accordingly, the pattern layer 12 may cause the propagating light to be emitted to the transferred material in an unintended region to cure the transferred material in the unintended region before transfer. The master 1 according to the present embodiment enables propagating light transmitted or guided through the pattern layer 12 to be absorbed by the absorption layer 20 which will be described later. Accordingly, the master 1 according to the present embodiment can restrain the transferred material from being unintentionally cured before transfer, and therefore can restrain occurrence of a transfer failure.

The micro concave-convex structure 30 formed in the pattern layer 12 is a structure in which a plurality of concavities or convexities are arrayed regularly or irregularly. Specifically, an average size of the planar shapes of the plurality of concavities or convexities may be less than or equal to the wavelength of light belonging to the visible light band. The micro concave-convex structure 30 may be a structure in which the plurality of concavities or convexities are arranged regularly or irregularly in such a manner that an average interval between the plurality of concavities or convexities is less than or equal to the wavelength of light belonging to the visible light band.

For example, the average size of the planar shapes of the plurality of concavities or convexities and the average interval therebetween may be less than 1 µm, and preferably may be more than or equal to 100 nm and less than or equal to 350 nm. In a case where the average size of the planar shapes of the plurality of concavities or convexities and the average interval therebetween fall within the above range, the micro concave-convex structure 30 can function as what is called a moth-eye structure that restrains reflection of light belonging to the visible light band. On the other hand, in a case where the average size of the planar shapes of the plurality of concavities or convexities and the average interval therebetween are less than 100 nm, it may be difficult to form the micro concave-convex structure 30. Alternatively, in a case where the average size of the planar shapes of the plurality of concavities or convexities and the average interval therebetween exceed 350 nm, diffraction of visible light may occur to degrade the function as the moth-eye structure.

Herein, the planar shapes of the concavities or convexities may be any of a substantially circular shape, an elliptical shape, and a polygonal shape. In addition, the arrangement of the concavities or convexities in the micro concave-convex structure 30 may be any of a close-packed arrangement, rectangular lattice arrangement, hexagonal lattice arrangement, and staggered lattice arrangement. The arrangement may be selected as appropriate in accordance with the function to be exerted by a transferred object obtained by transferring the micro concave-convex structure 30.

The absorption layer 20 is provided so as to be sandwiched between the base material 11 and the pattern layer 12. That is, the absorption layer 20 is arranged on the outer peripheral side of the base material 11 and on the inner peripheral side of the pattern layer 12, and is laminated between the base material 11 and the pattern layer 12. Materials of the absorption layer 20 and the pattern layer 12 are selected such that the absorption layer 20 has a light absorption coefficient larger than the light absorption coefficient of the pattern layer 12. Accordingly, the absorption layer 20 can absorb light transmitted or guided through the pattern layer 12 of light emitted to cure the transferred material.

The absorption layer 20 can be formed of a non-metallic material that has a light absorption coefficient larger than that of the pattern layer 12 and is not transparent. Specifically, the absorption layer 20 is formed of Si.

The absorption layer 20 may be exposed to a strong acid or strong base cleaning solution penetrated through the pattern layer 12 in the cleaning step after transfer, and therefore preferably is formed of a material having high corrosion resistance described above. On the other hand, in a case where the absorption layer 20 is formed of a metallic material or the like, the absorption layer 20 may be etched by the cleaning solution penetrated through the pattern layer 12 in the cleaning step after transfer to separate the base material 11 and the pattern layer 12. It is therefore not preferable to form the absorption layer 20 of a metallic material or the like.

Furthermore, heat is applied to the master 1 in many cases in the transfer step of manufacturing a transferred object and the cleaning step of reproducing the master 1. Thus, in order to restrain cracks from occurring between the absorption layer 20 and the pattern layer 12 or between the absorption layer 20 and the base material 11, the absorption layer 20 preferably is formed of a material having a coefficient of linear expansion (also called a coefficient of thermal expansion) close to those of the pattern layer 12 and the base material 11. For example, in a case where the base material 11 and the pattern layer 12 are formed using SiO₂ as a main constituent, the absorption layer 20 preferably is formed of Si having a coefficient of linear expansion close to that of SiO₂.

As to the film thickness of the absorption layer 20, a suitable film thickness can be selected as appropriate in accordance with the material that forms the absorption layer 20 such that the absorption layer 20 can have a sufficient light absorption property. Note that Si may be naturally oxidized to be SiOₓ if the film thickness of Si is excessively thin. Therefore, the lower limit of the film thickness of the absorption layer 20 formed of Si may be set at 5 nm. As the film thickness of the absorption layer 20 is thicker, the light absorption property of the absorption layer 20 is improved. However, in a case where the film thickness of the absorption layer 20 is excessively thick, a longer time is required to form the absorption layer 20, and the absorption layer 20 is more likely to be separated, which increases the difficulty of manufacturing the master 1. Therefore, the upper limit of the film thickness of the absorption layer 20 may be set at 10000 nm, for example.

Note that the transferred object manufactured using the master 1 described above can be used for various applications. For example, the transferred object manufactured using the master 1 can be used as an optical member such as a light guide panel, a light diffuser panel, a microlens array, a Fresnel lens array, diffraction grating, or an anti-reflection film.

### <2. Arrangement of absorption layer>

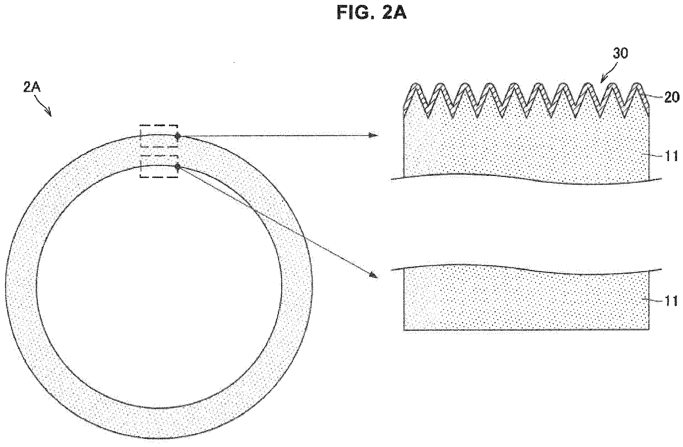

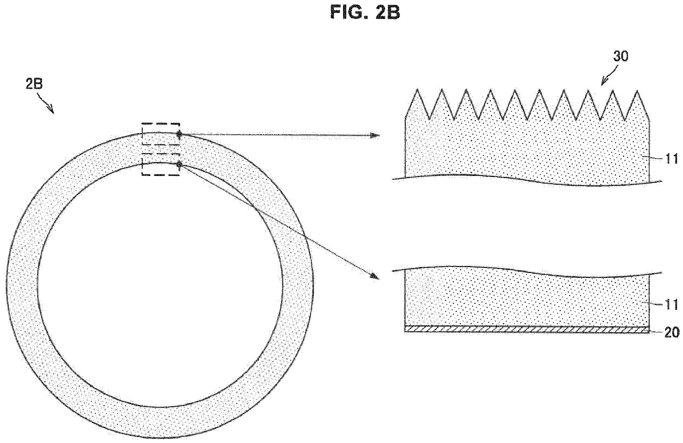

Next, superiority of the arrangement of the absorption layer 20 in the master 1 according to the present embodiment will be described with reference to FIG. 2A and FIG. 2B. FIG. 2A is a cross-section diagram schematically illustrating a master 2A according to Comparative Example 1 in which the arrangement of the absorption layer 20 has been changed from that of the master 1 illustrated in FIG. 1, and FIG. 2B is a cross-section diagram schematically illustrating a master 2B according to Comparative Example 2 in which the arrangement of the absorption layer 20 has been changed from that of the master 1 illustrated in FIG. 1.

In the master 2A according to Comparative Example 1, the absorption layer 20 is provided on the surface of the micro concave-convex structure 30 on the outer peripheral surface of the base material 11, as illustrated in FIG. 2A. In the master 2A according to Comparative Example 1, however, the absorption layer 20 measuring several tens of nanometers is provided on the surface of the micro concave-convex structure 30 formed on the order of nanometers or micrometers, and thus, the shape of the micro concave-convex structure 30 is changed by the absorption layer 20. Therefore, a transferred object manufactured using the master 2A according to Comparative Example 1 may not achieve expected properties.

In addition, in the master 2A according to Comparative Example 1, the absorption layer 20 is exposed at the surface of the master 2A, and is therefore exposed to the cleaning solution when cleaning the master 2A. Thus, the absorption layer 20 may be etched and removed as the cleaning solution enters between the absorption layer 20 and the base material 11 when cleaning the master 2A. Therefore, the master 2A according to Comparative Example 1 is less durable in the cleaning step after transfer, and is not suitable for repeated use through cleaning.

In the master 2B according to Comparative Example 2, the absorption layer 20 is provided on the inner peripheral surface of the base material 11, as illustrated in FIG. 2B. However, since the micro concave-convex structure 30 is not formed on the inner peripheral surface of the base material 11, light reflection on the absorption layer 20 is increased, which may actually increase propagating light transmitted or guided through the base material 11. Thus, in a transferred object manufactured using the master 2B according to Comparative Example 2, the transferred material is likely to be cured before transfer, so that a transfer failure is likely to occur. Therefore, the master 2B according to Comparative Example 2 degrades the manufactured transferred object in quality.

In addition, in the master 2B according to Comparative Example 2, the absorption layer 20 is exposed at the surface of the master 2B similarly to the master 2A according to Comparative Example 1, and is therefore exposed to the cleaning solution when cleaning the master 2B. Thus, the absorption layer 20 may be etched and removed as the cleaning solution enters between the absorption layer 20 and the base material 11 when cleaning the master 2B. Therefore, the master 2B according to Comparative Example 2 is less durable in the cleaning step after transfer, and is not suitable for repeated use through cleaning.

On the other hand, in the master 1 according to the present embodiment, the absorption layer 20 is sandwiched between the base material 11 and the pattern layer 12, and arranged inside the master 1 as illustrated in FIG. 1, and is therefore not exposed at the surface of the master 1. Thus, the master 1 according to the present embodiment can prevent the absorption layer 20 from being etched and removed by the cleaning solution in the cleaning step after transfer. In addition, in the master 1 according to the present embodiment, the absorption layer 20 that absorbs propagating light transmitted or guided through the inside of the master 1 can be provided without changing the surface shape of the micro concave-convex structure 30. Therefore, in the master 1 according to the present embodiment, the absorption layer 20 that absorbs propagating light transmitted or guided through the inside of the base material 11 is provided at a position that is suitable for repeated use through cleaning and does not degrade the properties of the master 1.

### <3. Method of manufacturing master>

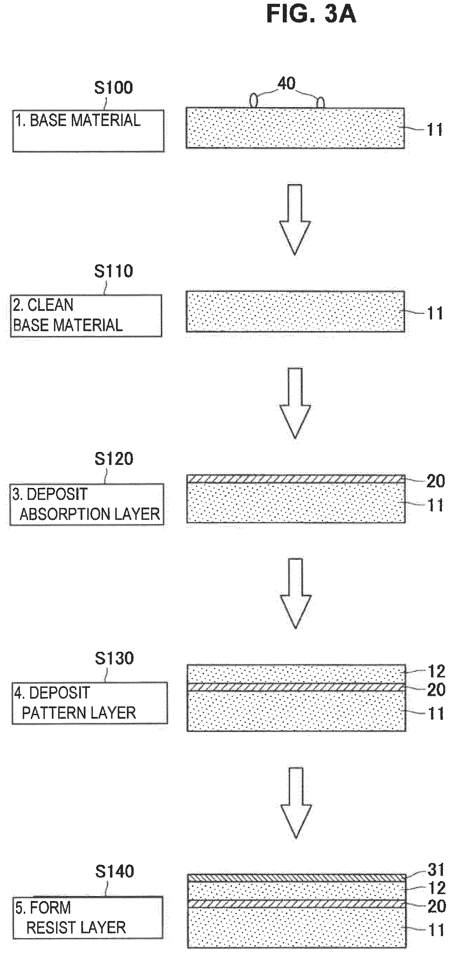

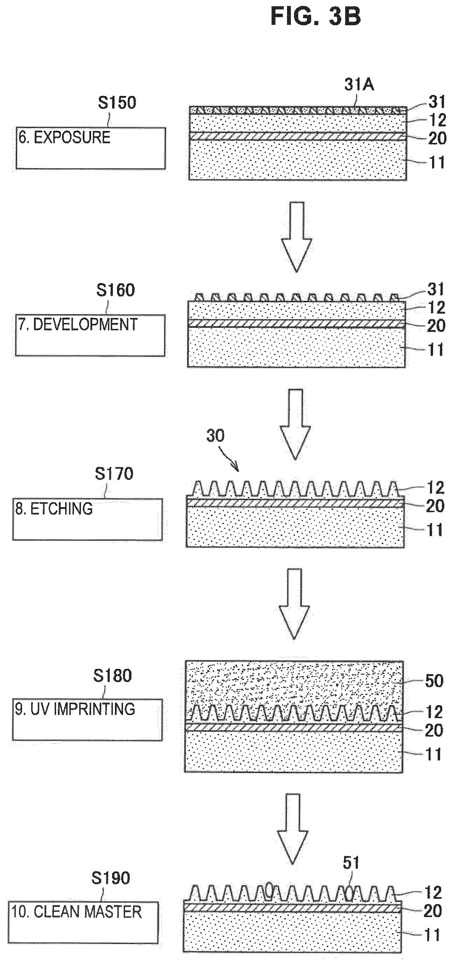

Next, a method of manufacturing the master 1 and a transferred object according to the present embodiment will be described with reference to FIG. 3A and FIG. 3B. FIG. 3A and FIG. 3B are flowcharts describing steps of manufacturing the master 1 and the transferred object according to the present embodiment.

As illustrated in FIG. 3A, first, the base material 11 made of quartz or the like is prepared (S100). Note that although FIG. 3A illustrates the base material 11 having a planar shape for the sake of description, the base material 11 may have a cylindrical shape, for example.

Next, dusts 40 and the like adhering to the outer peripheral surface and the like of the base material 11 are removed by cleaning (S110). For example, cleaning of the base material 11 can be executed by combining ultrasonic cleaning through use of pure water or a neutral detergent, rinsing with pure water, and drying with warm pure water.

Thereafter, the absorption layer 20 is deposited on the outer peripheral surface of the base material 11 after cleaning (S120). Specifically, the absorption layer 20 can be formed by depositing Si on the outer peripheral surface of the base material 11 to a film thickness of 25 nm to 50 nm using sputtering.

Next, the pattern layer 12 is deposited on the absorption layer 20 (S130). Specifically, the pattern layer 12 can be formed by depositing SiO₂ on the absorption layer 20 to a film thickness of 300 nm to 500 nm using oxygen reactive sputtering.

Next, a resist layer 31 is deposited on the pattern layer 12 (S140). Specifically, the resist layer 31 can be formed using an inorganic resist or organic resist. A latent image can be formed on the inorganic resist or organic resist by exposure to laser light or the like. For example, in a case of using an inorganic resist composed of a metal oxide containing one or more types of transition metals such as tungsten (W) or molybdenum (Mo), the resist layer 31 can be formed by depositing the inorganic resist on the pattern layer 12 using sputtering or the like. In a case of using an organic resist such as a novolac-type resist or chemically-amplified resist, the resist layer 31 can be formed by depositing the organic resist on the pattern layer 12 using spin coating or the like.

Next, as illustrated in FIG. 3B, a latent image 31A corresponding to the micro concave-convex structure 30 is formed on the resist layer 31 by emitting laser light or the like to expose the resist layer 31 (S150). The wavelength of the laser light emitted to the resist layer 31 may be a wavelength belonging to a blue light band of 400 nm to 500 nm, for example.

Next, the resist layer 31 is developed to form a pattern corresponding to the latent image 31A on the resist layer 31 (S160). For example, in a case where the resist layer 31 is formed of an inorganic resist, the resist layer 31 can be developed with an alkaline solution such as a tetramethyl ammonium hydroxide (TMAH) aqueous solution. In a case where the resist layer 31 is formed of an organic resist, the resist layer 31 can be developed with various organic solvents such as ester or alcohol.

Thereafter, the pattern layer 12 is etched using, as a mask, the resist layer 31 on which the pattern corresponding to the micro concave-convex structure 30 has been formed to form the micro concave-convex structure 30 in the pattern layer 12 (S170). The pattern layer 12 can be etched using dry etching by means of fluorocarbon gas or wet etching by means of hydrofluoric acid or the like. Note that ashing treatment may be performed after etching the pattern layer 12 in order to remove the remaining resist layer 31.

The master 1 can be manufactured through the above steps. Next, steps of manufacturing a transferred object using the master 1 will be described.

As illustrated in FIG. 3B, first, a light-curing resin composition containing an ultraviolet-curing resin such as acryl acrylate resin or epoxy acrylate resin is applied onto the pattern layer 12 of the master 1, and then a base film is laminated to form a transferred material layer 50 (S180). Next, by emitting ultraviolet rays to the transferred material layer 50 with a metal halide lamp or the like, the light-curing resin composition is cured, and the micro concave-convex structure 30 is transferred to the transferred material layer 50. Thereafter, the transferred material layer 50 is separated from the master 1 to form a transferred object.

A residue 51 of the light-curing resin composition or the like is adhering to the pattern layer 12 of the master 1 after the transferred material layer 50 is separated. Thus, for reutilization of the master 1 after the transfer, cleaning for removing the residue 51 or the like adhering to the pattern layer 12 is performed (S190). Specifically, the master 1 can be cleaned by immersing the master 1 after the transfer into a mixed solution of concentrated sulfuric acid and a hydrogen peroxide solution for several hours, and then performing pure water rinsing, ultrasonic cleaning, and warm pure water drying. The cleaned master 1 is used again for UV imprinting in step S180.

As described above, according to the present embodiment, a plurality of the transferred objects can be manufactured by cleaning and repeatedly using the master 1. Therefore, a transferred object in which a transfer failure is restrained can be manufactured with higher efficiency.

### [Examples]

Hereinafter, the master according to the present embodiment will be described further specifically with reference to examples and comparative examples. Note that the examples described below are condition examples for presenting the practicability and effects of the master according to the present embodiment and the method of manufacturing the master, and the present invention is not limited to the following examples.

### (Example 1)

A master according to Example 1 is a master in which an absorption layer is formed between a base material and a pattern layer (see FIG. 1). The master according to Example 1 was manufactured through the following steps. First, a cylindrical base material made of quartz glass (having an outer diameter of 132 mm, an inner diameter of 123 mm, an axial length of 100 mm, and a radial thickness of 4.5 mm) was prepared, and the base material was cleaned. Thereafter, Si was deposited on the outer peripheral surface of the base material to a film thickness of 35 nm using sputtering by means of Ar gas to form the absorption layer. Next, SiO₂ was deposited on the absorption layer to a film thickness of 400 nm using oxygen reactive sputtering by means of Ar gas and oxygen gas to form the pattern layer.

Next, a tungsten oxide was deposited on the pattern layer to a film thickness of 55 nm using sputtering to form a resist layer. Next, thermal lithography was performed using laser light having a wavelength of 405 nm output from a semiconductor laser light source to form a latent image on the resist layer.

Thereafter, the resist layer on which the latent image had been formed was developed at 27°C for 900 seconds using a 2.38% by mass aqueous solution of tetramethylammonium hydroxide (TMAH) (made by TOKYO OHKA KOGYO CO., LTD.) to form a pattern corresponding to the latent image on the resist layer. Next, using the resist layer on which the pattern had been formed as a mask, reactive ion etching (RIE) was performed for 30 minutes at a gas pressure of 0.5 Pa and input power of 150 W using CHF₃ gas (30 sccm) to form a micro concave-convex structure in the pattern layer. The micro concave-convex structure formed in the pattern layer was an anti-reflection structure against light in the blue light band (that is, a moth-eye structure) in which the concavity-convexity pitch was 150 nm to 200 nm, and the concavity-convexity height difference was 120 nm.

### (Comparative example 1)

The master according to Comparative Example 1 is a master in which an absorption layer is formed on the surface of a micro concave-convex structure formed in the outer peripheral surface of the base material (see FIG. 2A). The master according to Comparative Example 1 was manufactured through the following steps. A cylindrical base material made of quartz glass (having an outer diameter of 132 mm, an inner diameter of 123 mm, an axial length of 100 mm, and a radial thickness of 4.5 mm) was prepared, and the base material was cleaned.

Next, a tungsten oxide was deposited on the outer peripheral surface of the base material to a film thickness of 55 nm using sputtering to form a resist layer. Next, thermal lithography was performed using laser light having a wavelength of 405 nm output from a semiconductor laser light source to form a latent image on the resist layer.

Thereafter, the resist layer on which the latent image had been formed was developed at 27°C for 900 seconds using a 2.38% by mass aqueous solution of tetramethylammonium hydroxide (TMAH) (made by TOKYO OHKA KOGYO CO., LTD.) to form a pattern corresponding to the latent image on the resist layer. Next, using the resist layer on which the pattern had been formed as a mask, reactive ion etching (RIE) was performed for 30 minutes at a gas pressure of 0.5 Pa and input power of 150 W using CHF₃ gas (30 sccm) to form a micro concave-convex structure in the outer peripheral surface of the base material. The micro concave-convex structure formed in the outer peripheral surface of the base material was an anti-reflection structure against light in the blue light band (that is, a moth-eye structure) in which the concavity-convexity pitch was 150 nm to 200 nm, and the concavity-convexity height difference was 120 nm. Furthermore, SiOₓ was deposited on the surface of the micro concave-convex structure using sputtering to a film thickness of 35 nm to form an absorption layer.

### (Comparative example 2)

The master according to Comparative example 3 is a master including a base material and a micro concave-convex structure formed in the outer peripheral surface of the base material, and having no absorption layer formed therein. The master according to Comparative Example 2 was manufactured by a similar method to that of Comparative example 1 except that an absorption layer was not formed.

### (Evaluation of transferred object)

Transferred objects were manufactured using the masters according to Example 1 and Comparative examples 1, 2, and a light reflectance of each of the transferred objects was measured. Specifically, the micro concave-convex structure was transferred to an ultraviolet-curing resin provided on a triacetylcellulose film base material using the roll-to-roll imprinting technology. Note that ultra-violet rays of 1000 mJ/cm² were emitted for a minute with a metal halide lamp to cure the ultraviolet-curing resin. Thereafter, the light reflectance of each of the transferred objects obtained by transferring the micro concave-convex structure was measured.

Note that it was possible to manufacture evaluatable transferred objects with the masters according to Example 1 and Comparative Example 1, whilst with the master according to Comparative Example 2, propagating light transmitted or guided through the base material produced many transfer failures in the transferred object, and it was not possible to manufacture an evaluatable transferred object.

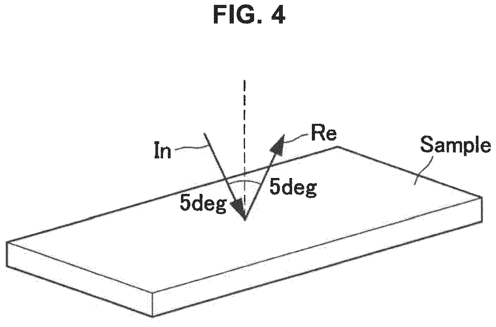

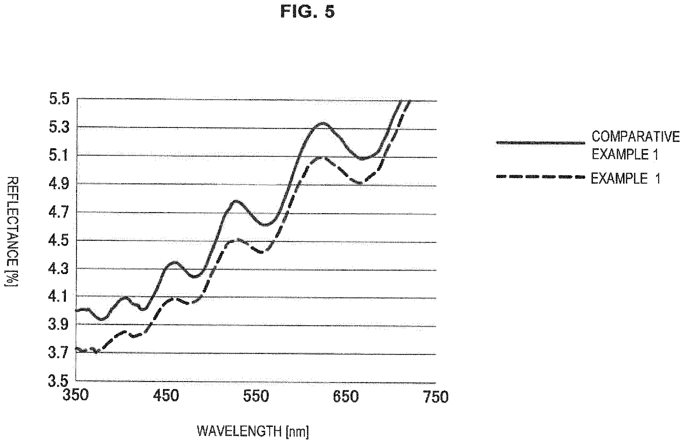

FIG. 4 and FIG. 5 illustrate a method of measuring the light reflectances for the transferred objects manufactured using the masters according to Example 1 and Comparative Example 1, and measurement results. FIG. 4 is a schematic diagram describing the method of measuring the light reflectances for the transferred objects. FIG. 5 is a graph illustrating the results of measuring the light reflectances for the transferred objects.

As illustrated in FIG. 4, incident light In was made incident upon the surface of a sample (transferred object) at an incident angle of 5°, and reflected light Re output at a reflection angle of 5° was measured to measure the light reflectance of the transferred object. The reflected light Re was measured using the spectrophotometer V550 or ARM-500V (both made by JASCO Corporation). The measurement wavelength was 350 nm to 800 nm, and the wavelength resolution was 1 nm.

FIG. 5 illustrates the results of measuring the light reflectances of the transferred objects. Referring to the results illustrated in FIG. 5, it is appreciated that the transferred object manufactured using the master according to Comparative Example 1 has a light reflectance higher than that of the transferred object manufactured using the master according to Example 1. This is considered because in the master according to Comparative Example 1, the shape of the micro concave-convex structure was changed from a desired shape by the absorption layer deposited on the surface of the micro concave-convex structure, and the anti-reflection property of the transferred object was degraded accordingly. Therefore, it is appreciated that the master according to Example 1 enables a micro concave-convex structure having a desired shape to be transferred suitably to the transferred material. For example, in a case of using the transferred object as an anti-reflection film, it can be said that the transferred object has a more excellent anti-reflection property as the light reflectance of the transferred object is lower. The results illustrated in FIG. 5 reveal that the master according to Example 1 made it possible to manufacture a transferred object (anti-reflection film) having a restrained transfer failure of the micro concave-convex structure and having an excellent anti-reflection property as compared with the master according to Comparative Example 1.

### (Evaluation of resistance to cleaning)

In order to evaluate the resistance to cleaning of the masters according to Example 1 and Comparative Example 1, oxygen plasma treatment was performed on the masters according to Example 1 and Comparative Example 1 for 15 minutes to measure the light transmittance of each master. The oxygen plasma treatment is an example of treatment of clarifying the master. A load imposed on the master by the oxygen plasma treatment is equivalent to a load imposed by the cleaning treatment through use of a mixed solution of concentrated sulfuric acid and a hydrogen peroxide solution. Thus, in the present measurement test, the oxygen plasma treatment was used instead of cleaning treatment.

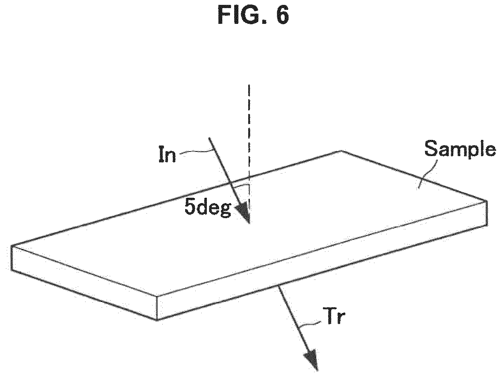

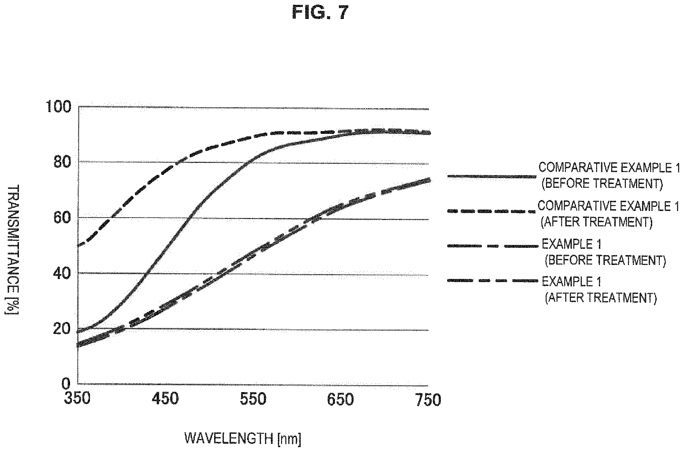

FIG. 6 and FIG. 7 illustrate a method of measuring the light transmittances for the masters according to Example 1 and Comparative Example 1, and measurement results. FIG. 6 is a schematic diagram describing the method of measuring the light transmittances of the masters. FIG. 7 is a graph illustrating results of measuring the light transmittances of the masters before and after the oxygen plasma treatment.

As illustrated in FIG. 6, the incident light In was made incident upon the surface of a sample (master) at an incident angle of 5°, and transmitted light Tr transmitted through the master and output from the rear surface of the master was measured to measure the light transmittance of the master. The transmitted light Tr was measured using the spectrophotometer V550 or ARM-500V (both made by JASCO Corporation). The measurement wavelength was 350 nm to 800 nm, and the wavelength resolution was 1 nm.

FIG. 7 illustrates results of measuring the light transmittances of the masters. Referring to the results illustrated in FIG. 7, it is appreciated that the master according to Comparative Example 1 was increased in light transmittance by the oxygen plasma treatment. This is considered because the absorption layer provided on the surface of the master was damaged by the oxygen plasma treatment. It is therefore considered that in the master according to Comparative Example 1, the light transmittance of the master is increased by the cleaning treatment after transfer, and propagating light is less likely to be restrained from occurring because of repetition of the cleaning treatment, so that a transfer failure of the micro concave-convex structure in the transferred object is more likely to occur.

On the other hand, the master according to Example 1 is not varied in light transmittance before and after being subjected to the oxygen plasma treatment. It is therefore considered that in the master according to Example 1, even in the case of repeating the cleaning treatment after transfer, occurrence of propagating light can be restrained, and occurrence of a transfer failure of the micro concave-convex structure in the transferred object can be restrained.

### (Evaluation of absorption layer)

Next, optical properties of the absorption layer for each material were evaluated. Specifically, after transfer through use of a cylindrical master, the master was cut into piece shapes to produce master pieces according to Test examples 1 to 5. Then, for the master pieces according to Test examples 1 to 5, spectrum of front transmittance and front reflectance were measured using the spectrophotometer V650 (made by JASCO Corporation). Furthermore, based on the measured front transmittance and front reflectance, loss transmittances of the master pieces according to Test examples 1 to 5 were calculated. Loss transmittance (%) = 100(%) - front reflectance (%) - front transmittance (%)

The loss transmittance is a value obtained by subtracting the front transmittance and front reflectance measured by the spectrophotometer from 100%, and is an index that evaluates transmission and absorption of the master pieces according to Test examples 1 to 5 excluding the influence of front reflectance. It is indicated that as the loss transmittance is higher, the light absorptivity of the master is higher, and less propagating light is transmitted or guided through the inside of the master.

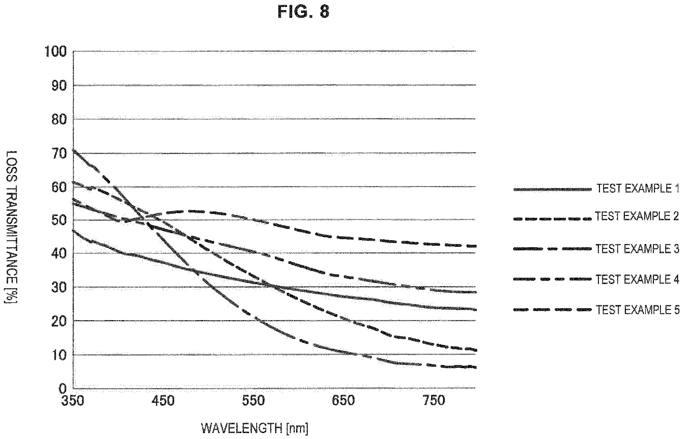

FIG. 8 is a graph illustrating spectrum of loss transmittances of the master pieces according to Test examples 1 to 5.

The master piece according to Test example 1 is a master piece obtained by forming a moth-eye structure in one surface of a base material, and depositing tungsten (W) on the surface of the moth-eye structure to a film thickness of 10 nm as an absorption layer. That is, the master piece according to Test example 1 is a master piece having a structure similar to that of the master according to Comparative Example 1 described above (see FIG. 2A).

The master piece according to Test example 2 is a master piece obtained by forming silicon (Si) on one surface of a base material to a film thickness of 10 nm as an absorption layer, and forming a pattern layer made of SiO₂ on the absorption layer (note that a moth-eye structure is not formed).

The master piece according to Test example 3 is a master piece obtained by forming a moth-eye structure in the pattern layer of the master piece according to Test example 2. That is, the master piece according to Test example 3 is a master piece having a structure similar to that of the master according to Example 1 described above (see FIG. 1).

The master piece according to Test example 4 is a master piece obtained by depositing carbon (C) on one surface of a base material to a film thickness of 40 nm as an absorption layer, and forming a pattern layer made of SiO₂ on the absorption layer (note that a moth-eye structure is not formed).

The master piece according to Test example 5 is a master piece obtained by depositing titanium nitride (TiN) on one surface of a base material to a film thickness of 40 nm as an absorption layer, and forming a pattern layer made of SiO₂ on the absorption layer (note that a moth-eye structure is not formed).

Light in the ultraviolet region (ultraviolet rays) affects unintended curing of a transferred material made of an ultraviolet-curing resin. Therefore, the light absorptivities of the masters according to Test examples 1 to 5 described above were evaluated mainly using the wavelength (350 to 400 nm) in the ultraviolet region as a reference. As illustrated in FIG. 8, it is appreciated that since the master piece according to Test example 1 is provided with the absorption layer on the surface of the moth-eye structure, the loss transmittance is low in the ultraviolet region, and propagating light cannot be restrained. On the other hand, it is appreciated that since the master pieces according to Test example 2, 4, and 5 are each provided with the absorption layer between the base material and the pattern layer although the absorption layer varies in material and film thickness, the loss transmittance is high in the ultraviolet region, and propagating light can be restrained. In particular, it is appreciated that although an absorption layer having a film thickness smaller than those of the master pieces according to Test examples 4 and 5 is used in the master piece according to Test example 2 (the material of the absorption layer: Si), a high loss transmittance equivalent to those of the master pieces according to Test examples 4 and 5 (the materials of the absorption layer: C, TiN) can be achieved. Accordingly, it is appreciated that Si is preferable to C and TiN for the material of the absorption layer, and the absorption layer made of Si can achieve high absorption performance. It is also appreciated that in the master piece according to Test example 3, the moth-eye structure is formed in the pattern layer in addition to the absorption layer provided between the base material and the pattern layer, so that the loss transmittance is lower than that of Test example 2.

As described above, the master according to the present embodiment enables a transferred object in which occurrence of a transfer failure is restrained to be manufactured, and can be used repeatedly through cleaning to manufacture a transferred object in which occurrence of a transfer failure is restrained with high efficiency.

The preferred embodiment(s) of the present invention has/have been described above in detail with reference to the accompanying drawings, whilst the present invention is not limited to the above examples. A person skilled in the art may find various alterations and modifications within the scope of the appended claims, and it should be understood that they will naturally come under the technical scope of the present invention.

### Reference Signs List

- 1: master
- 11: base material
- 12: pattern layer
- 20: absorption layer
- 30: micro concave-convex structure

## Claims

1. A master (1) comprising:
a base material (11);
a pattern layer (12) provided on one surface of the base material (11), a micro concave-convex structure (30) being formed in the pattern layer (12); and
an absorption layer (20) provided to be sandwiched between the base material (11) and the pattern layer (12), and having a light absorption coefficient larger than a light absorption coefficient of the pattern layer (12), **characterised in that** the absorption layer (20) is formed of Si.

2. The master (1) according to claim 1, wherein
the pattern layer (12) is formed of a transparent material.

3. The master (1) according to claim 1 or 2, wherein
the pattern layer (12) is formed of SiO₂.

4. The master (1) according to any one of claims 1 to 3, wherein
the base material (11) is formed of a ceramic material or a glass material.

5. The master (1) according to any one of claims 1 to 4, wherein
the micro concave-convex structure (30) is a moth-eye structure.

6. The master (1) according to any one of claims 1 to 5, wherein
the one surface of the base material (11) has a surface roughness of less than or equal to 1/100 of a concavity-convexity height difference of the micro concave-convex structure (30).

7. The master (1) according to any one of claims 1 to 6, wherein
the pattern layer (12) has a film thickness larger than a concavity-convexity height difference of the micro concave-convex structure (30).

8. The master (1) according to any one of claims 1 to 7, wherein
the absorption layer (20) has a film thickness of more than or equal to 5 nm.

9. The master (1) according to any one of claims 1 to 8, wherein
the base material (11) has a cylindrical shape.

10. The master (1) according to claim 9, wherein
the one surface of the base material (11) is an outer peripheral surface of the cylindrical shape, and
the pattern layer (12) is provided along the outer peripheral surface.

11. A method of manufacturing a master (1), comprising:
forming an absorption layer (20) on one surface of a base material (11); and
forming a pattern layer (12) on the absorption layer (20), the pattern layer (12) having a light absorption coefficient smaller than a light absorption coefficient of the absorption layer (20), a micro concave-convex structure (30) being formed in the pattern layer (12), **characterised in that** the absorption layer (20) is formed of Si.

12. A method of manufacturing a transferred object, comprising:
applying a light-curing resin onto the pattern layer (12) of the master (1) according to any one of claims 1 to 10 to form a resin layer;
curing the resin layer and then separating the resin layer to transfer the micro concave-convex structure (30) to the resin layer and form the transferred object; and
cleaning the master (1) after the resin layer is separated to remove the light-curing resin remaining on the master (1), wherein
the master (1) after cleaning is repeatedly used to manufacture a plurality of the transferred objects.

## Patentansprüche

1. Master (1), umfassend:
ein Basismaterial (11);
eine Musterschicht (12), die auf einer Oberfläche des Basismaterials (11) bereitgestellt ist, wobei eine Mikro-Konkav-Konvex-Struktur (30) in der Musterschicht (12) gebildet ist; und
eine Absorptionsschicht (20), die zwischen dem Basismaterial (11) und der Musterschicht (12) angeordnet ist und einen Lichtabsorptionskoeffizienten aufweist, der größer ist als der Lichtabsorptionskoeffizient der Musterschicht (12),
**dadurch gekennzeichnet, dass** die Absorptionsschicht (20) aus Si gebildet ist.

2. Master (1) nach Anspruch 1, wobei
die Musterschicht (12) aus einem transparenten Material gebildet ist.

3. Master (1) nach Anspruch 1 oder 2, wobei
die Musterschicht (12) aus SiO₂ gebildet ist.

4. Master (1) nach einem der Ansprüche 1 bis 3, wobei
das Basismaterial (11) aus einem keramischen Material oder einem Glasmaterial gebildet ist.

5. Master (1) nach einem der Ansprüche 1 bis 4, wobei die Mikro-Konkav-Konvex-Struktur (30) eine Mottenaugenstruktur ist.

6. Master (1) nach einem der Ansprüche 1 bis 5, wobei
die eine Oberfläche des Basismaterials (11) eine Oberflächenrauheit von weniger als oder gleich 1/100 einer Höhendifferenz zwischen Konkavität und Konvexität der Mikro-Konkav-Konvex-Struktur (30) aufweist.

7. Master (1) nach einem der Ansprüche 1 bis 6, wobei
die Musterschicht (12) eine Filmdicke aufweist, die größer ist als eine Höhendifferenz zwischen Konkavität und Konvexität der Mikro-Konkav-Konvex-Struktur (30).

8. Master (1) nach einem der Ansprüche 1 bis 7, wobei
die Absorptionsschicht (20) eine Filmdicke von mehr als oder gleich 5 nm aufweist.

9. Master (1) nach einem der Ansprüche 1 bis 8, wobei
das Basismaterial (11) eine zylindrische Form aufweist.

10. Master (1) nach Anspruch 9, wobei
die eine Oberfläche des Basismaterials (11) eine Außenumfangsfläche der zylindrischen Form ist und
die Musterschicht (12) entlang der Außenumfangsfläche bereitgestellt ist.

11. Verfahren zur Herstellung eines Masters (1), umfassend:
das Ausbilden einer Absorptionsschicht (20) auf einer Oberfläche eines Basismaterials (11); und
das Ausbilden einer Musterschicht (12) auf der Absorptionsschicht (20), wobei die Musterschicht (12) einen Lichtabsorptionskoeffizienten aufweist, der kleiner ist als ein Lichtabsorptionskoeffizient der Absorptionsschicht (20), wobei eine Mikro-Konkav-Konvex-Struktur (30) in der Musterschicht (12) gebildet ist,
**dadurch gekennzeichnet, dass** die Absorptionsschicht (20) aus Si gebildet ist.

12. Verfahren zur Herstellung eines übertragenen Objekts, umfassend:
das Auftragen eines lichthärtenden Harzes auf die Musterschicht (12) des Masters (1) nach einem der Ansprüche 1 bis 10, um eine Harzschicht zu bilden;
das Aushärten der Harzschicht und dann das Trennen der Harzschicht, um die Mikro-Konkav-Konvex-Struktur (30) auf die Harzschicht zu übertragen und das übertragene Objekt zu bilden; und
das Reinigen des Masters (1), nachdem die Harzschicht getrennt wurde, um das auf dem Master (1) verbliebene lichthärtende Harz zu entfernen, wobei
der Master (1) nach dem Reinigen wiederholt zur Herstellung einer Mehrzahl der übertragenen Objekte verwendet wird.

## Revendications

1. Matrice (1) comprenant :
un matériau de base (11) ;
une couche de motifs (12) prévue sur une surface du matériau de base (11), une microstructure concave-convexe (30) étant formée dans la couche de motifs (12) ; et
une couche d'absorption (20) prévue pour être prise en sandwich entre le matériau de base (11) et la couche de motifs (12), et ayant un coefficient d'absorption lumineuse supérieur à un coefficient d'absorption lumineuse de la couche de motifs (12),
**caractérisée en ce que**
la couche d'absorption (20) est formée de Si.

2. Matrice (1) selon la revendication 1, dans laquelle
la couche de motifs (12) est formée d'un matériau transparent.

3. Matrice (1) selon la revendication 1 ou 2, dans laquelle
la couche de motifs (12) est formée de SiO₂.

4. Matrice (1) selon l'une quelconque des revendications 1 à 3, dans laquelle le matériau de base (11) est formé d'un matériau céramique ou d'un matériau de verre.

5. Matrice (1) selon l'une quelconque des revendications 1 à 4, dans laquelle la microstructure concave-convexe (30) est une structure d'œil de papillon de nuit.

6. Matrice (1) selon l'une quelconque des revendications 1 à 5, dans laquelle la surface en question du matériau de base (11) a une rugosité de surface inférieure ou égale à 1/100 d'une différence de hauteur de concavité-convexité de la microstructure concave-convexe (30).

7. Matrice (1) selon l'une quelconque des revendications 1 à 6, dans laquelle la couche de motifs (12) a une épaisseur de film supérieure à une différence de hauteur de concavité-convexité de la microstructure concave-convexe (30).

8. Matrice (1) selon l'une quelconque des revendications 1 à 7, dans laquelle la couche d'absorption (20) a une épaisseur de film supérieure ou égale à 5 nm.

9. Matrice (1) selon l'une quelconque des revendications 1 à 8, dans laquelle le matériau de base (11) a une forme cylindrique.

10. Matrice (1) selon la revendication 9, dans laquelle la surface en question du matériau de base (11) est une surface périphérique externe de la forme cylindrique, et
la couche de motifs (12) est prévue le long de la surface périphérique externe.

11. Procédé de fabrication d'une matrice (1), comprenant :
former une couche d'absorption (20) sur une surface d'un matériau de base (11) ; et
former une couche de motifs (12) sur la couche d'absorption (20), la couche de motifs (12) ayant un coefficient d'absorption lumineuse inférieur à un coefficient d'absorption lumineuse de la couche d'absorption (20), une microstructure concave-convexe (30) étant formée dans la couche de motifs (12),
**caractérisé en ce que** la couche d'absorption (20) est formée de Si.

12. Procédé de fabrication d'un objet transféré, comprenant :
appliquer une résine thermodurcissable sur la couche de motifs (12) de la matrice (1) selon l'une quelconque des revendications 1 à 10 pour former une couche de résine ;
durcir la couche de résine, puis séparer la couche de résine pour transférer la microstructure concave-convexe (30) à la couche de résine et former l'objet transféré ; et
nettoyer la matrice (1) après que la couche de résine est séparée pour éliminer la résine thermodurcissable restante sur la matrice (1), dans lequel la matrice (1) après nettoyage est utilisée de manière répétée pour fabriquer une pluralité des objets transférés.
